# EUROPEAN PATENT APPLICATION

(11) **EP 4 491 870 A1**
(43) Date of publication of application: **15.01.2025**
(21) Application number: 23185544.6
(22) Date of filing: 14.07.2023
(51) Int. Cl.: F03D 13/25, F03D 17/00, F03D 80/50

(54) **METHOD AND SYSTEM FOR REPLACING AN INSTALLED YAW RING, WIND TURBINE AND METHOD FOR OPERATING A WIND TURBINE**

(71) Applicant: Siemens Gamesa Renewable Energy A/S, 7330 Brande (DK)
(72) Inventor: Jensen, Martin Bjerregaard, 7451 Sunds (DK); Theisen, Soeren Henneberg, 7430 Ikast (DK); Troelsen, Henrik Jason, 7400 Herning (DK)
(74) Representative: SGRE-Association

(57) **Abstract**

Method for replacing an installed yaw ring (1) of a wind turbine (2) with a replacement yaw ring (3), wherein in an initial state of the wind turbine (2) a bedframe (4) of the wind turbine (2) is pivot-mounted to a topmost segment (5) of a tower (6) of the wind turbine (2), the installed yaw ring (1) is mounted to the topmost segment (5), and at least one yaw drive (7) of the wind turbine engages (2) the installed yaw ring (1) to rotate the bedframe (4) with respect to the topmost segment (5) when the yaw drive (7) is operated, the method comprising the steps of: lifting a module (8) of the wind turbine (2), which comprises the bedframe (4), the topmost segment (5), and the installed yaw ring (1), off a tower stump (9) of the tower (6) formed by at least one further segment (10-12) of the tower (6) and placing the module (8) in a servicing position (13), detaching a submodule (17) of the module (8) comprising the bedframe (4) from the topmost segment (5) and moving the submodule (17) to a holding position (18), unmounting the installed yaw ring (1) form the topmost segment (5), mounting the replacement yaw ring (3) to the topmost segment (5), reattaching the submodule (17) to the topmost segment (5), to form a refurbished module (19) comprising the bedframe (4), the topmost segment (5), and the replacement yaw ring (3), and lifting the refurbished module (19) onto the tower stump (9).

## Description

### FIELD OF THE INVENTION

The present invention relates to a method for replacing an installed yaw ring of a wind turbine with a replacement yaw ring, a method for operating a wind turbine, a wind turbine, and a system for replacing an installed yaw ring of an off-shore wind turbine.

### BACKGROUND

To change the yaw angle of a wind turbine, e.g., to rotate a nacelle of the wind turbine, typically yaw drives that engage a yaw ring are used. The yaw ring is typically mounted to the upper end of a tower. Due to wear and tear, it can be necessary to replace such a yaw ring. For this purpose, the nacelle of the wind turbine or in general a bedframe that supports the part of the wind turbine that is pivot-mounted atop the tower can be lifted off the tower and be placed on a support frame, while the yaw ring is exchanged.

It is an objective problem to provide an optimized solution for replacing an installed yaw ring of a wind turbine and to avoid disadvantages, in particular to optimize with respect to the work load and cost of such a replacement.

### SUMMARY

According to an aspect, the problem is solved by providing a method for replacing an installed yaw ring of a wind turbine with a replacement yaw ring, wherein in an initial state of the wind turbine a bedframe of the wind turbine is pivot-mounted to a topmost segment of a tower of the wind turbine, the installed yaw ring is mounted to the topmost segment, and at least one yaw drive of the wind turbine engages the installed yaw ring to rotate the bedframe with respect to the topmost segment when the yaw drive is operated. The method comprising the steps of: lifting a module of the wind turbine, which comprises the bedframe, the topmost segment, and the installed yaw ring, off a tower stump of the tower formed by at least one further segment of the tower and placing the module in a servicing position; detaching a submodule of the module comprising the bedframe from the topmost segment and moving the submodule to a holding position; unmounting the installed yaw ring form the topmost segment; mounting the replacement yaw ring to the topmost segment; reattaching the submodule to the topmost segment, to form a refurbished module comprising the bedframe, the topmost segment, and the replacement yaw ring; and lifting the refurbished module onto the tower stump.

In particular the problem is solved by providing a method, a wind turbine and/or a system according to the independent claims.

By lifting off and later replacing the complete module including the topmost segment from the tower stump, the risk of damaging the bedframe and/or components attached to the bedframe can be noticeably reduced. This applies in particular to large and/or off-shore wind turbines, wherein the bedframe and/or parts attached to the bedframe, e.g., a nacelle housing, can extend below the upper end of the tower. In these cases, the components extending below the upper end of the tower could be easily damaged when the bedframe is even slightly tilted while lifting off or putting down the bedframe.

In the inventive method the detachment and attachment of the bedframe to the topmost segment is performed, while the module is arranged in the service position, in particular on the deck of a ship or on the ground, and therefore the movement and guidance of the submodule can be achieved with relative ease and tools of low complexity. Therefore, no or fewer components need to be unmounted from the bedframe prior to the lifting of the bedframe off the tower and/or an installation of elaborate guiding and/or lifting means atop the tower that would be necessary in the prior art can be avoided. This reduces the required time for exchanging the yaw ring and lowers the cost for the required equipment.

At the same time, the lowest part of the module when placed in the servicing position can be formed by the topmost segment of the tower in the inventive method and it can therefore be sufficient to provide an essentially flat, e.g., ring-shaped, surface on which the module can be placed. In principle, the module could therefore be placed directly on the floor, e.g., on the deck of a ship. Using a support frame to hold the module can however be advantageous to allow for a robust support and to allow for easy access for personal, especially for detaching the submodule. The inventive approach therefore avoids the need for a more elaborate frame, e.g., a frame having a rather high central column, that would typically be necessary, if the submodule would be directly lifted off the tower and placed on the frame, when parts of the submodule extend below the top off the tower.

A bottom end of the topmost segment can be placed on a support frame to place the module in the servicing position. The support frame can especially provide access to the hollow interior of the topmost segment from below. Alternatively or additionally, access to the interior of the segment can, e.g., be provided by a hatch in the wall of the topmost segment and/or from the bedframe. Access to the interior can, e.g., be necessary to detaching the submodule, e.g., by removing and/or unlocking clamping means that attach the bedframe to the installed yaw ring as discussed below.

The module can, e.g., be held in the servicing position by gravity, e.g., due to a placement on a flat, e.g., ring shaped surface of the support frame, by additional holding means, e.g., bolts and/or clamps, and/or by the use of a slip-joint.

The bedframe can be pivot-mounted to the topmost segment, either via a direct connection or preferably via the installed yaw ring. In Particular the installed yaw ring is rigidly mounted to the topmost segment. The bedframe can be attached to the installed yaw ring via clamping means as discussed below.

The module can be detached from the tower stump before lifting the module off the tower stump and/or reattached after lifting the module onto the tower stump. The connection can, e.g., be a bolt connection between the topmost segment and the tower stump. Alternatively, the topmost segment and therefore the module can be connected to the tower stump, e.g., via a slip joint connection that does in particular not require additional attachment means after lifting the module onto the tower stump.

Before the lifting of the module off the tower stump, in particular before any mounting means connecting the module to the tower stump are removed, at least some of the components that are directly or indirectly supported by the bedframe can be unmounted, e.g., the rotor blades, a main cable and/or any other cable connections between the tower stump and the module.

Prior to detaching the submodule from the topmost segment, at least one further part of the module, e.g., at least one grease tray and/or platform, can be removed. This can improve the access to relevant areas.

In particular the submodule does comprise further parts beyond the bedframe, e.g., the yaw drive, a housing of a nacelle of the wind turbine attached to the bedframe and/or a generator of the wind turbine. In particular the yaw drive can be mounted to the bedframe.

The application uses a coordinate system defined with respect to the installed yaw ring, namely the radial and circumferential direction of the installed yaw ring and an axial direction that extend in the direction of the yaw axis around which the bedframe can pivot with respect to the topmost segment in the initial state of the wind turbine.

The vertical direction preferably coincides at least essentially with the axial direction. The installed yaw ring therefore preferably lies essentially within the horizontal plane. Within the horizontal plane the windward direction is preferably essentially parallel to the rotational axis of the rotor of the wind turbine and the tower is arranged downwind in the windward direction with respect to the blades of the wind turbine during the normal operation of the wind turbine.

The term 'essentially' is used throughout this disclosure and shall be understood to refer to an allowable deviation off an angle by less than 15° or less than 10°. When applied to other measures it shall be understood to refer to an allowable deviation of up to 15 % or up to 5 %.

The submodule can be held suspended in the air in the holding position by a lifting device, in particular by a crane, while the installed yaw ring is unmounted and the replacement yaw ring is mounted. In this case it is unnecessary to lay down the submodule during the yaw ring replacement and any risk of damaging components of the submodule by laying it down in any other position than on top of the topmost segment can be avoided.

Since the submodule is held suspended in the air, there is no need for a separate support frame to hold the submodule while the installed yaw ring is unmounted and the replacement yaw ring is mounted. This is especially advantageous, when the submodule comprises parts of the bedframe or other components that extend below that contact area contacting the topmost segment of the tower in the initial state of the wind turbine, since a support frame for the submodule would typically require a relatively high central column in this case to support of the submodule in an area that is designed to support the weight of the submodule, in particular the contact area.

The lifting device can also be used to lift the module off the tower stump and/or to lift the refurbished module onto the tower stump. this further reduces the amount of necessary equipment and can speed up on the workflow, especially when the submodule stays connected to the lifting device.

The lifting device can in particular be continuously attached to the submodule at least from the step of lifting the module off the tower stump until the step of lifting the refurbished module onto the tower stump. This allows for a further lowering of the number of work steps of the replacement method, therefore further reducing the time requirement and cost for replacing the yaw ring.

A second lifting device, in particular a second crane, can be used during the unmounting of the installed yaw ring to lift the installed yaw ring off the topmost segment and place it in a laydown area, in particular on a deck of a ship, and/or during the mounting of the replacement yaw ring to lift the replacement yaw ring from a further laydown area, in particular on the deck of the ship, onto the topmost segment. The second crane can be a ship crane or, e.g., a vehicle-mounted crane.

The described method can advantageously be used with rather large wind turbines and therefore large and heavy yaw rings. Therefore, the use of the second lifting device can be advantageous. The replacement yaw ring can be transported, e.g., on a ship, while placed in the further laydown area. It is however typically advantageous to only place the replacement yaw ring in the further laydown area shortly before or even a during the performance of the further steps of method. During the transport to the wind turbine location, the replacement yaw ring can, e.g., be stored in a hold of the ship.

A ship crane, in particular a ship crane forming the lifting device, can be used to lift the module off the tower stump and/or to lift the refurbished module onto the tower stump and/or to lift the submodule off the topmost segment to place it in the holding position and/or to replace the submodule onto the topmost segment to reattach the submodule to the topmost segment.

When the use of the ship or of components of the ship, e.g., the ship crane, are discussed, the ship can especially be a wind turbine installation vessel, in particular self-elevating jackup rig. Such a ship can provide a robust platform for operations on the ship deck and can be robustly locked in place with respect to the wind turbine itself. The ship crane of such a ship is typically designed to operate in the area of the top end of the wind turbine and can therefore be used to lift off and replace the module. Additionally, ships used in wind turbine construction often have additional means for supporting and guiding components of the wind turbine, e.g., against an undesirable movement by wind, which can be used to, e.g., support the module while placing it in the servicing position and/or to hold the module more robustly in the holding position.

The servicing position can be located on the deck of a ship, in particular on a support frame located on the deck of the ship. This is especially advantageous, when used in conjunction with the use of a ship crane of the same ship as the lifting device. Using a servicing position on a ship deck avoids the need for the construction of a dedicated platform that can be used as a laydown area for the module during servicing.

Multiple clamping means can be attached to the bedframe in such a way that an overlapping section of the respective clamping means overlaps in the radial direction with a surface of the installed yaw ring facing away from the bedframe in the initial state, therefore limiting a movement of the bedframe in the axial direction with respect to the installed yaw ring. The detachment of the submodule from the topmost segment can then comprise a pivoting of at least one of the clamping means around a respective pivot axis located outside of the overlapping section to align the respective clamping means with a central opening of the installed yaw ring.

When the bedframe is lifted or tilted beyond a certain degree in the initial state of the wind turbine, the overlapping section or a part of the overlapping section of at least one of the clamping means will contact the surface of the installed yaw ring facing away from the bedframe, therefore blocking any further upward movement. A support surface of the bedframe or of a further component connected to the bedframe can additionally be arranged adjacent to the surface of the yaw ring that faces towards the bedframe to limit the relative axial movement between the yaw ring and the bedframe in both axial directions.

The respective clamping means is preferably indirectly attached to the bedframe, in particular via a respective radial block. Such radial blocks can be used to limit the movement of the bedframe with respect to the yaw ring. In particular a radial outer surface of at least one of the radial blocks can contact a radial inner surface of the installed yaw ring when the limit of the relative movement is reached.

The respective clamping means can in particular be attached to the radial block, the bedframe and/or some other intermediate component using multiple bolts. By removing all but one of the bolts, the remaining bolt can be used as a pivot bearing to pivot the respective clamping means around the respective pivot axis.

The pivot axis can extend essentially parallel to the axial direction and can, e.g., have an angle of less than 15° or less than 10° or less than 5° to the axial direction.

At least one of the clamping means can stay attached to the bedframe at least until the end of the step of lifting the refurbished module onto the tower stump. By only pivoting at least some of the clamping means and leaving them attached to the bedframe, none of the clamping means or a smaller number of clamping means needs to be completely removed to dismount the submodule from the topmost section. Therefore, none of the clamping means or only a small number of the clamping means needs to be put down, e.g., on a working platform within the topmost segment or in a support frame that supports the topmost segment in the servicing position. This can reduce the load on such a platform. Therefore, a notable increase in the load bearing capacity of such a platform, that would be necessary when all clamping means would be removed and placed on this platform, can be avoided.

The clamping means can in particular stay attached to the bedframe indefinitely or until a disassembly or a further servicing of the wind turbine is performed at a later point in time that requires the removal of the respective clamping means.

A further one of the clamping means can be completely disconnected from the bedframe and stored in a storage position before another one of the clamping means is pivoted. Preferably multiple further ones of the clamping means are disconnected and stored before unlocking the remaining clamping means by pivoting them as discussed above.

The placement of the clamping means along the circumference of the installed yaw ring can be rather dense in at least a sector of the circumference, in particular on the downwind side, since the weight of the blades of the wind turbine typically exerts a tilting force towards the upwind side on the connection. The density of the arrangement can be high enough to block the pivoting of at least one of the clamping means by at least one neighboring clamping means. By removing a selected number of clamping means, e.g., every second clamping means on the downwind side and no clamping means on the upwind side, the arrangement of the remaining clamping means can be sufficiently sparse to allow for an unlocking of the remaining clamping means by pivoting. Since typically only a small number of clamping means needs to be removed, the amount of load added to a working platform when it is also used as storage position can be kept low.

Multiple radial blocks can be attached to the bedframe in the initial state, each radial block having a radial outer surface that limits the movement of the bedframe with respect to the installed yaw ring in the radial direction by contacting the radial inner surface of the installed yaw ring when the limit of the relative movement is reached. The step of detaching the submodule from the topmost segment can then comprise the replacement of at least one of the radial blocks by a guiding block. The respective guiding block can have a radial outer surface that limits the movement of the bedframe with respect to the installed yaw ring during the detachment of the submodule from the topmost segment in the radial direction by contacting the radial inner surface of the installed yaw ring when the limit of the relative movement is reached while the distance between the installed yaw ring and the bedframe in the axial direction is below the length of the guiding block in the axial direction. The length of the guiding block in the axial direction can be larger than the length of the radial block in the axial direction.

The replacement of at least some of the radial blocks by guiding blocks can allow for an extended guidance of the submodule, even after the submodule was already lifted slightly of the topmost segment. This can notably reduce the risk of damaging components due to a tilting of the submodule during the liftoff. The same guidance with the same advantage also results, when replacing the submodule onto the topmost segment after exchanging the yaw ring. In an advantageous embodiment, four to six of the radial blocks can be replaced by guiding blocks.

At least one yaw drive can be mounted to the bedframe, wherein the respective yaw drive comprises a gear engaging a toothing of the installed yaw ring, in particular a toothing of the radial outer surface of the yaw ring, to rotate the bedframe with respect to the topmost segment when the yaw drive is operated in the initial state. The step of detaching the submodule from the topmost segment can then comprise shifting the respective gear axially towards the bedframe, in particular by axially shifting a respective yaw motor for driving the respective gear, before the bedframe is lifted off the topmost segment.

Once the submodule is no longer supported by the topmost segment, either directly and/or via the yaw ring, the submodule can potentially slightly tilt, e.g., due to slight imbalances and/or due to wind. While the discussed guiding blocks and/or other guiding means can limit the amount of tilt, even a minor tilt can lead to strong bending forces, e.g., on a shaft driving the respective gear, when the gears would still be engaged with the installed yaw ring. This can be avoided by retracting the gears. The shifting of the respective gear can especially be performed, while the respective yaw drive is still attached to the bedframe. It is, e.g., possible, that the bedframe guides the shifting of the gear or of attached components, e.g., the yaw motor.

It is, e.g., possible to lift the whole yaw drive, in particular including the yaw motor, the gear, a connecting shaft and optionally a gearing between motor and gear, and lock it in a raised position while it is still attached to the bedframe. The yaw drive can, e.g., be locked in place in a raised position, until the submodule is reattached to the topmost segment.

The invention also concerns a method for operating a wind turbine, in particular an offshore wind turbine, further in particular a floating offshore wind turbine, and/or for feeding electrical and/or chemical energy to an electrical and/or chemical utility grid, the method comprising the following steps:
executing the steps of an embodiment of the disclosed method to replace an installed yaw ring of the wind turbine with a replacement yaw ring,
generating, by the wind turbine, electrical power and/or electrical energy, and in particular generating at least partially from the electrical energy, further in particular, by transforming electrical energy into hydrogen by electrolysis, chemical energy in form of a gas or liquid, in particular in the form of hydrogen,
transmitting at least a part of the electrical power and/or of the electrical energy and/or of the chemical energy to an energy receiving arrangement, in particular wherein the energy receiving arrangement is not positioned in international waters, is positioned onshore, and/or is positioned within a 12-miles-zone of a respective sovereign national state over which the respective state has jurisdiction,
supplying at least a part of the electrical power and/or of the electrical energy and/or of the chemical energy to an electrical and/or chemical utility grid, in particular to an onshore electrical and/or chemical utility grid.

The steps of generating, transmitting, and supplying electrical power and/or electrical and/or chemical energy are preferably executed at least after replacing the installed yaw ring by the replacement yaw ring. In particular these steps can additionally be performed prior to the replacement of the installed yaw ring by the replacement yaw ring, therefore allowing for supplying of electrical power and/or electrical and/or chemical energy by the wind turbine before and after the yaw ring replacement.

The term "chemical energy" includes means for storing energy in a chemical substance such as in hydrogen. A chemical energy grid could for example be a gas (hydrogen) grid and/or storage device.

The invention also concerns a wind turbine comprising a bedframe that is pivot-mounted to a topmost segment of a tower of the wind turbine, a replacement yaw ring that is mounted to the topmost segment, and at least one yaw drive that engages the replacement yaw ring to rotate the bedframe with respect to the topmost segment when the yaw drive is operated, wherein the replacement yaw ring is mounted by using an embodiment of the previously disclosed method to replace a previously installed yaw ring with the replacement yaw ring.

Additionally, the invention concerns a system for replacing an installed yaw ring of an off-shore wind turbine, wherein the system is designed to replace an installed yaw ring of the wind turbine with a replacement yaw ring using an embodiment of the previously disclosed method, when the system is used in conjunction with the wind turbine, wherein the system comprises a ship, wherein the ship comprises a lifting device, in particular a crane, for lifting the module of the wind turbine off the tower stump of the tower of the wind turbine, for moving the submodule to the holding position, and for lifting the refurbished module onto the tower stump, and provides the holding position for the module on a deck of the ship, in particular on a support frame located on the deck, and the replacement yaw ring stored on the ship.

It is to be understood, that the features mentioned above, for example the ship comprising a lifting device as disclosed in conjunction with the system according to present invention and the provision of power to an onshore electrical utility grid as disclosed in conjunction with the inventive method for operating a wind turbine, and those yet to be explained below can be used not only in the respective combinations indicated, but also in other combinations or in isolation, without leaving the scope of the present invention. In particular, the features of the different aspects, embodiments, and/or methods and/or systems of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
- Fig. 1: shows a schematic representation of an embodiment of the wind turbine according to the present invention and an embodiment of a system according to the present invention being used to perform an embodiment of the method for replacing an installed yaw ring and an embodiment of the method for operating a wind turbine according to present invention,
- Fig. 2: schematically shows an intermediate step of the method for replacing an installed yaw ring used in fig. 1,
- Fig. 3: is a flow chart of an exemplary embodiment of the method for replacing an installed yaw ring according to the present invention, and
- Fig. 4: is a flow chart of an exemplary embodiment of the method for operating a wind turbine according to the present invention.

### DETAILED DESCRIPTION

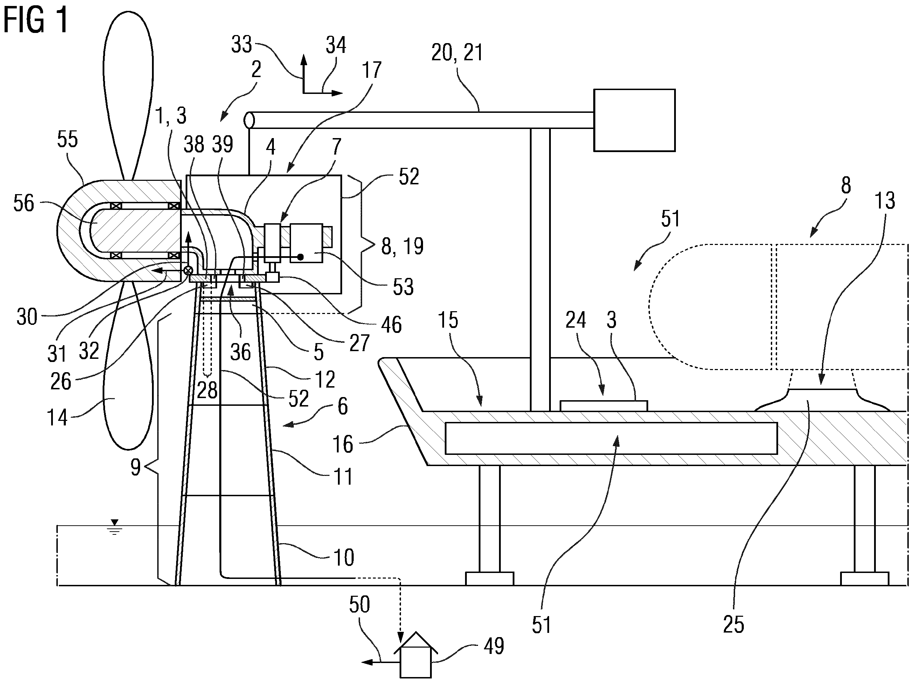

Fig. 1 describes two different states of the wind turbine 2, that is an off-shore wind turbine in the example. The two states only differ in that in an initial state an originally installed yaw ring 1 is used in the wind turbine 2, wherein in the refurbished state a replacement yaw ring 3 is used instead. Since the originally installed yaw ring 1 and the replacement yaw ring 3 would be indistinguishable in the drawing, only a single drawing of the wind turbine 2 is used and the different states of the wind turbine are only distinguished by the use of different reference numerals for the installed yaw ring 1 and the replacement yaw ring 3 and for the module 8 and the refurbished module 19.

In an initial state of the wind turbine 2, a bedframe 4 of the wind turbine 2 is pivot-mounted to a topmost segment 5 of a tower 6 of the wind turbine 2. The installed yaw ring 1 is mounted to the topmost segment 5. At least one yaw drive 7 of the wind turbine 2 engages the installed yaw ring 1 to rotate the bedframe 4 with respect to the topmost segment 5 and therefore the tower 6 when the yaw drive 7 is operated.

The following description uses a coordinate system defined with respect to the installed yaw ring 1 spanned by the radial direction 31 and circumferential direction 32 of the installed yaw ring 1 and an axial direction 30 that extend in the direction of the yaw axis around which the bedframe 4 can pivot with respect to the topmost segment 5 in the initial state of the wind turbine 1 shown in fig. 1. The vertical direction 33 essentially coincides with the axial direction 33 in the example. Within the horizontal plane, the downwind windward direction 34 is essentially parallel to the rotational axis of the rotor 55 of the wind turbine 2.

Due to wear and tear and/or other damage it can be necessary to replace the yaw ring 1 by a replacement yaw ring 3. While the most obvious solution to this problem would be, to directly lift the bedframe 4 of the installed yaw ring 1 off the topmost segment of 5 of the tower 6, to allow a direct access to the installed yaw ring 1, while it is installed on top of the tower, this approach can require elaborate equipment and long work times for workers atop the tower as already discussed in detail in the general part of the description.

Therefore, a different approach is used to replace the installed yaw ring 1. To achieve an easier yaw ring exchange, a module 8 of the wind turbine 2, which comprises the bedframe 4, the topmost segment 5 of the tower 6, and the installed yaw ring 1, is lifted off a tower stump 9 of the tower 6 that is formed by further segments 10-12 of the tower 6. In the example this is performed by using a lifting device 20 formed by a ship crane 21.

The module 8 is placed in a servicing position 13 as shown by the dashed representation of the module 8 in Fig. 1. In the example the servicing position 13 is located on top of a support frame 25 which is in turn located on a deck 15 of the ship 16. By placing the module 8 in the servicing position 13, access to components the need to be handled and/or mounted and/or unmounted by personal in the process of exchanging the yaw ring is improved and less elaborate equipment is necessary for this task.

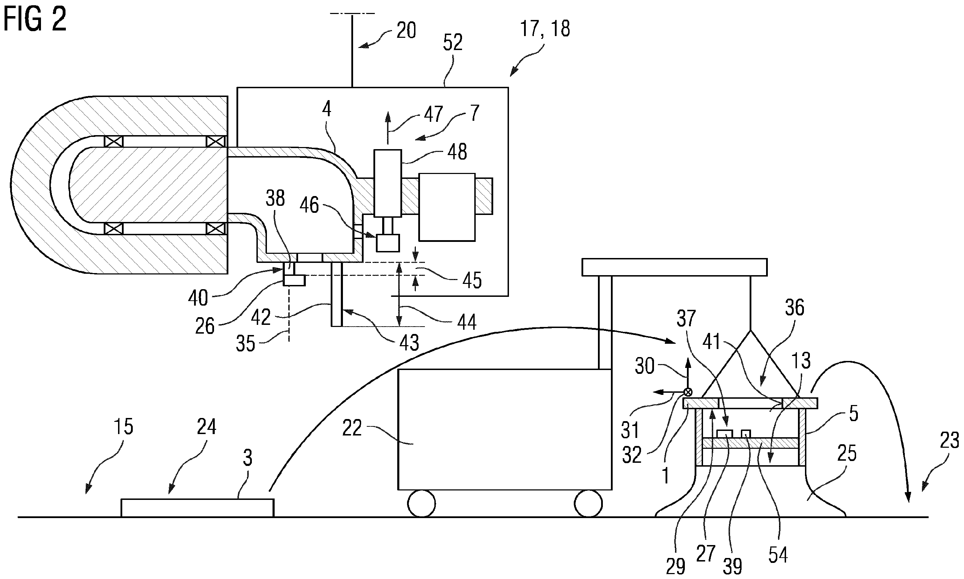

After the module 8 is placed in the servicing position 13, a submodule 17 of the module 8 that comprises the bedframe 4 is detached from the topmost segment 5 and moved to a holding position 18. The resulting arrangement is shown fig. 2.

In the example, the submodule is held suspended in the air in the holding position 18 by the lifting device 20, while the installed yaw ring 1 is unmounted and the replacement of yaw ring 3 is mounted. It is therefore not necessary to provide an additional support frame to hold the submodule 17 while the yaw ring is replaced. This is especially advantageous in the example, since components attached to the bedframe 4, namely the housing 52 of the nacelle, extend below the upper end of the tower 6 in the example and would therefore form the lowest part of the submodule 17 when the submodule 17 is put down. Since these components are typically not loadbearing, an elaborate support frame, e.g., having a column for connecting to the bedframe 4, would be necessary. Holding the submodule 17 suspended in the air therefore notably lowers of the amount and complexity of the required equipment.

In the intermediate step shown in fig. 2, the installed yaw ring 1 is exposed and can therefore be unmounted form the topmost segment 5 with relative ease. Afterwards the replacement yaw ring 3 can be mounted to the topmost segment 5.

The submodule 17 can then be reattached to the topmost segment 5, to form a refurbished module 19 comprising the bedframe 4, the topmost segment 5, and the replacement yaw ring 3. The refurbished module 19 can be lifted back onto the tower stump 9 using the lifting device 20.

Once the wind turbine 2 is reassembled, a refurbished state of the wind turbine 2 is reached, in which the replacement yaw ring 3 is installed in the place of the previously installed yaw ring 1. That wind turbine 2 can then be operated normally again to generate power.

The previously discussed method can be implemented with relative ease when using the system for replacing an installed yaw ring 1 of an off-shore wind turbine 2 shown in the figure 1. The system 51 comprises the ship 16 and the replacement yaw ring 3 that is stored on the ship 16. In the example the replacement yaw ring 3 is already shown in a laydown area 24 on top of the deck 15 of the ship, from where it can easily be moved to the top of the topmost segment 5 once the topmost segment 5 is placed in the servicing position 13 and the originally installed yaw ring 1 is removed. This placement is advantageous once the replacement of the installed yaw ring 1 has already started or is imminent. Before this point in time, it is, e.g., also possible to store the replacement yaw ring 3 in the hold 51 of the ship 16 or in any other place on the ship 16.

The ship 16 comprises a lifting device 20, which is formed by a crane 21 in the example. As already discussed, this lifting device 20 can lift the module 8 off the tower stump 9, move the submodule 17 to the holding position 18 and hold there, and lift the refurbished module 19 back onto the tower stump 9.

The ship 16 also provides the holding position 13 for the module 8 on the deck 15, in the example on the support frame 25 located on the deck 15.

In the example, a jack-up vessel is used as the ship 16 that can be jacked-up with jacks connecting to the sea floor to provide a stable platform. This minimizes the relative movement of, e.g., the lifting device 20 and the tower 6.

When the wind turbine 2 is operated, it can especially provide electrical power and/or electrical energy to an electrical utility grid 50 via an energy receiving arrangement 49 that is not positioned in international waters and/or that is positioned onshore and/or that is positioned within a 12-miles-zone of a respective sovereign national state over which the respective state has jurisdiction. Such an operation can be performed while the originally installed yaw ring 1 is still installed and after the replacement of the originally installed yaw ring 1 by the replacement yaw ring 3.

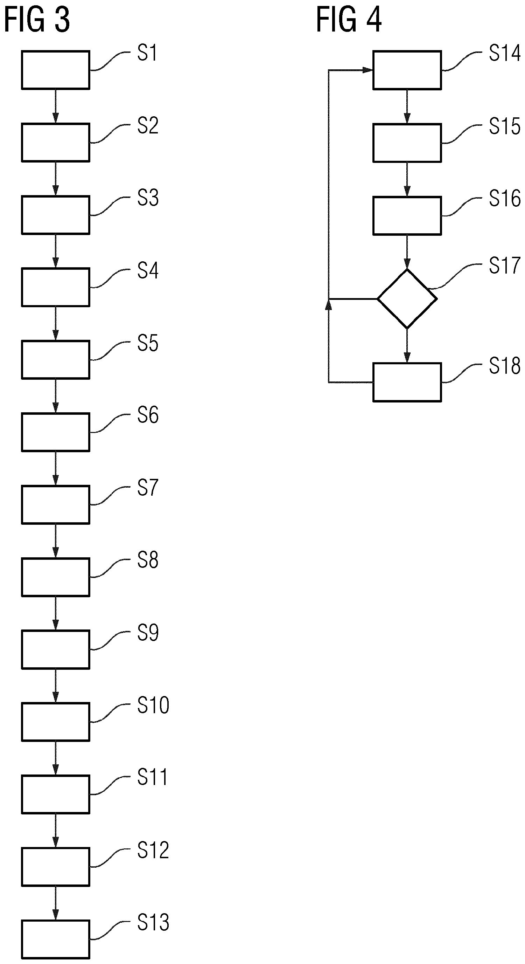

Further details of an advantageous embodiment of the method for replacing an installed yaw ring 1 of the wind turbine 2 will now be discussed in detail with additional reference to the flowchart shown in fig. 3. It should be noted, that a multitude of advantageous features is used in this embodiment, and that it is also possible, to only use a subgroup of these features or even only a single one of these features to further improve the previously discussed general method for replacing of the yaw ring 1.

In step S1 the rotor blades 14 are unmounted and the main cable 52 is a disconnected from a power conditioning unit 53 used in the example that is mounted to the bedframe 4. Additionally other cables (not shown) connecting the module 8 to the tower stump 9 can be disconnected.

In step S2 the lifting device at 20 is connected to the submodule 17 of the module 8. For simplicity's sake, the example shows a connection to the cover of 52 of the nacelle of the wind turbine 2. It is however also possible to, e.g., use a direct connection to the bedframe 4.

In step S3 the topmost segment 5 of the tower 6 is disconnected from the segment 12 of the tower 6 immediately below the topmost segment 5, e.g., by disconnecting bolted connection.

In step S4 the module 8 including the topmost segment 5, the bedframe 4, the installed yaw ring 1 and further components attached to the bedframe 4, e.g., the cover 52, the rotor 55 and the stator 56, can be moved to the servicing position 13 as already discussed above.

Once the module 8 is placed in the servicing position 13 and, e.g., attached to the support frame 25, in step S5 optionally some components can be unmounted from the module 8 to improve the access to the installed yaw ring 1, the clamping means 26, 27 and/or other relevant components. It is, e.g., possible to unmounted at least one grease tray (not shown) and/or platform (not shown) from the module 8.

In step S6 the submodule 17, that essentially comprises all of the components of the module 8 except for the topmost segment 5, the installed yaw ring 1 and some of the clamping means 26, 27 and radial blocks 38, 39 in the example, can be detached from the topmost segment 5. In the course of the detachment, it can be advantageous to shift the yaw drive 7 and therefore its motor 48 and gear 46 that engages the toothing (not shown) of the installed yaw ring 1 upward, as indicated by the arrow 47 in fig. 2. As already discussed in the general part of the description, this can be helpful to avoid the application of strong bending forces to components of the yaw drive 7. For simplicity's sake only a single yaw drive 7 is used in the example. In actual embodiments a larger number of separate yaw drives is typically used and all of these yaw drives can be shifted as described above.

In the example, the bedframe 4 is indirectly connected to the topmost section 5 via the installed yaw ring 1. Multiple radial blocks 38, 39 are attached to the bedframe 4. Each radial block 38, 39 has a radial outer surface 40 that is only marked in fig. 2 for reasons of clarity and that limits the movement of the bedframe 4 with respect to the installed yaw ring 1 in the radial direction 31 by contacting the radial inner surface 41 of the installed yaw ring 1, which is also only marked in fig. 2, when the limit of the relative movement is reached.

Clamping means 26, 27 are attached to the bottom of a respective one of the radial blocks in such a way that an overlapping section 28 of the respective clamping means 26, 27 overlaps in the radial direction 31 with a surface 29 of the installed yaw ring 1 facing away from the bedframe 4 in the initial state, therefore limiting a movement of the bedframe 4 in the axial direction 30 with respect to the installed yaw ring 1.

To allow for the submodule 17 and therefore bedframe 4 to be lifted off the installed yaw ring 1 and therefore off the topmost section 5, this overlap of the respective overlapping section 28 and the surface 29 of the installed yaw ring 1 needs be removed, which can be considered as an unlocking of the clamping means 26, 27. In the example this is achieved by completely unmounting the clamping means 27 and by pivoting the remaining clamping means 26 to eliminate this overlap.

As shown in figure 2, the clamping means 27 that are completely disconnected from the bedframe 4 can be stored in a storage position 37 that is located on an internal platform 38 of the topmost section 5 in the example. While it would in principle be possible to unlock all of the clamping of means 26, 27 by completely disconnecting them from the bedframe, placing all clamping means 26, 27 such a platform 38 would require a rather large weight-bearing capacity of the platform 38 that is typically not present in commonly used internal platforms. Therefore, a complete removal of all clamping means 26, 27 would require either the use of an especially strengthened internal platform 38 or additional working steps to move the removed clamping means 27 outside of the topmost segment 5.

Therefore, some of the clamping means 26, 27 stay connected to the bedframe 4 via a respective radial block 38 as a shown for the clamping means 26 in the example in fig. 2. The unlocking of these clamping means 26 is achieved by pivoting them around a respective pivot axis 35 located outside of the overlapping section 28 to align the respective clamping means 26 with a central opening 36 of the installed yaw ring 1. After this step the submodule 17 could in principle already be lifted of the installed yaw ring 1.

When the used clamping means are spaced sufficiently far apart, it can also be possible to unlock all of the clamping means 26, 27 by such a pivoting. The discussed combination of first removing some of the clamping means 26, 27 and then pivoting the remaining clamping means 26 is especially advantageous, when a pivoting of at least some of the clamping means 26 is initially blocked due to a relatively dense spacing of the clamping means 26, 27 in the circumferential direction 32. By removing some of the clamping means 26, 27, sufficient space is provided to allow for a pivoting of the remaining clamping means 26.

To improve the guidance during the lift off of the submodule 17, in step S7 some of the radial blocks 38, 39 can be replaced by a respective guiding block 42 as shown in figure 2 for the radial block 39. The respective guiding block 42 has a radial outer surface 43 that limits the movement of the bedframe 4 with respect to the installed yaw ring 1 during the detachment of the submodule 17 from the topmost segment 5 in the radial direction 31 by contacting the radial inner surface 41 of the installed yaw ring 1 when the limit of the relative movement is reached while the distance between the yaw ring 1 and the bedframe 4 in the axial direction 30 is below the length 44 of the guiding block 42 in the axial direction 30. Since the length 44 of the guiding block 42 in the axial direction 30 is larger than the length 45 of the replaced radial block 38 in the axial direction 30, e.g., by a factor of at least 5 or at least 10, the submodule 17 can be guided and a tilting of the submodule 17 can therefore be suppressed over a larger lifting distance.

In step S8, the lifting device at 20 is actuated to lift the disconnected submodule 17 of the installed yaw ring 1 and therefore off the topmost segment 5. The submodule 17 is moved to the holding position 18 and held suspended in this position, until it is replaced on top of the topmost segment 5 in a later step.

In a step S9 the installed yaw ring 1 is unmounted from the topmost segment 5, e.g., by manually removing bolts or other connection means that connect the installed yaw ring 1 to the topmost segment 5. In the example a second lifting device 22, in particular a vehicle-mounted crane or alternatively a further ship crane, is used to lift the unmounted installed yaw ring 1 off the topmost segment 5 and place it in a laydown area 23 on the deck 15 of the ship 16.

In step S10 the same second lifting device 22 can then be used to lift of the replacement yaw ring 3 from a further laydown area 24 on the deck 15 of the ship 16 onto the topmost segment 5. The replacement yaw ring 3 is then attached to the topmost segment 5 in the same way that the installed yaw ring 1 was previously connected to the topmost segment 5.

In step S11, the submodule 17 is placed back onto the topmost segment 5 and therefore the replacement yaw ring 3 and is reattached in this position to form the refurbished submodule 19. In the example the reattachment comprises the removal of any guiding blocks 42, the replacement of previously removed radial blocks 39 and the relocking of the clamping means 26, 27 by pivoting the remaining clamping means 26 back to their original position and locking them in place, e.g., by reinstalling previously removed bolts, and reattaching the removed clamping means 27.

In the step S12, the refurbished module 19 can be lifted onto the tower stump 9 and reattached. Afterwards the lifting device 20 can be disconnected from the submodule 17. The lifting device 20 is therefore continuously connected to the submodule 17 from step S2 until step S12 in the example.

In step S13 any components that were unmounted in step S1 can be reattached to put the winter turbine to back in working condition.

Fig. 4 is a flow chart of a method for operating the wind turbine 2. In step S14 electrical power is generated by a generator of the wind turbine 2 due to the rotation of the rotor 55 with respect to the stator 56.

In step S15 at least a part of the electrical power is transmitted to an energy receiving arrangement 49, in particular via the main cable 52. The energy receiving arrangement 49 is in particular not positioned in international waters and is in particular positioned onshore and/or within a 12-miles-zone of a respective sovereign national state over which the respective state has jurisdiction.

In step S16 at least a part of the electrical power is supplied to an electrical utility grid 50, in particular to an onshore electrical utility grid 50.

In step S17 it is evaluated, whether an exchange of the installed yaw ring 1 is required. It is, e.g., possible to replace an installed yaw ring after a given amount of operational time and/or after a given number of yawing operations. Additionally or alternatively, sensor data that can, e.g., indicated vibrations during yawing operations, can be evaluated to detect a requirement of a yaw ring replacement. When it is determined, that no replacement of the installed yaw ring 1 is required, the method can be repeated from step S14 while still using the installed yaw ring 1.

If it is however determined in a step S17, that the yaw ring 1 is to be replaced, such a replacement is performed in a step S 18. An exemplary procedure for such a replacement was already discussed with reference to fig. 3. After the replacement, the steps S14 to 16 can be performed while the replacement yaw ring 3 is used in the winter turbine 2.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

It has to be noted that embodiments of the invention have been described with reference to different subject matters. In particular, some embodiments have been described with reference to apparatus type claims, such as the ship of the system comprising a lifting device, whereas other embodiments have been described with reference to method type claims, such as the use of clamping means to delimit the movement of the bedframe with respect to the yaw ring. However, a person skilled in the art will gather from the above description that, unless otherwise notified, in addition to any combination of features belonging to one type of subject matter, also any combination between features relating to different subject matters, in particular between features of the apparatus type claims and features of the method type claims, such as a combination of an unlocking of the clamping means and the use of the ship of a system having a lifting device is considered as to be disclosed with this application.

## Claims

1. Method for replacing an installed yaw ring (1) of a wind turbine (2) with a replacement yaw ring (3), wherein in an initial state of the wind turbine (2)
a bedframe (4) of the wind turbine (2) is pivot-mounted to a topmost segment (5) of a tower (6) of the wind turbine (2),
the installed yaw ring (1) is mounted to the topmost segment (5), and
at least one yaw drive (7) of the wind turbine engages (2) the installed yaw ring (1) to rotate the bedframe (4) with respect to the topmost segment (5) when the yaw drive (7) is operated,
the method comprising the steps of:
lifting a module (8) of the wind turbine (2), which comprises the bedframe (4), the topmost segment (5), and the installed yaw ring (1), off a tower stump (9) of the tower (6) formed by at least one further segment (10-12) of the tower (6) and placing the module (8) in a servicing position (13);
detaching a submodule (17) of the module (8) comprising the bedframe (4) from the topmost segment (5) and moving the submodule (17) to a holding position (18);
unmounting the installed yaw ring (1) form the topmost segment (5);
mounting the replacement yaw ring (3) to the topmost segment (5);
reattaching the submodule (17) to the topmost segment (5), to form a refurbished module (19) comprising the bedframe (4), the topmost segment (5), and the replacement yaw ring (3); and
lifting the refurbished module (19) onto the tower stump (9) .

2. Method according to claim 1, wherein the submodule (17) is held suspended in the air in the holding position (18) by a lifting device (20), in particular by a crane (21), while the installed yaw ring (1) is unmounted and the replacement yaw ring (3) is mounted.

3. Method according to claim 2, wherein the lifting device (20) is also used to lift the module (8) off the tower stump (9), and/or to lift the refurbished module (19) onto the tower stump (9).

4. Method according to claim 2 or 3, wherein the lifting device (20) is continuously attached to the submodule (17) at least from the step of lifting the module (8) off the tower stump (9) until the step of lifting the refurbished module (19) onto the tower stump (9).

5. Method according to one of the claims 2 to 4, wherein a second lifting device (22), in particular a second crane, is used
during the unmounting of the installed yaw ring (1) to lift the installed yaw ring (1) of the topmost segment (5) and place it in a laydown area (23), in particular on a deck (15) of a ship (16), and/or
during the mounting of the replacement yaw ring (3) to lift the replacement yaw ring (3) from a further laydown area (24), in particular on the deck (15) of the ship (16), onto the topmost segment (5).

6. Method according to one of the preceding claims, wherein a ship crane (21), in particular a ship crane (21) forming the lifting device (20), is used
to lift the module (8) off the tower stump (9), and/or
to lift the refurbished module (19) onto the tower stump (9), and/or
to lift the submodule (17) off the topmost segment (5) to place it in the holding position (18), and/or
to replace the submodule (17) onto the topmost segment (5) to reattach the submodule (17) to the topmost segment (5).

7. Method according to one of the preceding claims, wherein the servicing position (13) is located on the deck (15) of a ship (16), in particular on a support frame (25) located on the deck (15) of the ship (16).

8. Method according to one of the preceding claims,
wherein multiple clamping means (26, 27) are attached to the bedframe (4) in such a way that an overlapping section (28) of the respective clamping means (26, 27) overlaps in the radial direction (31) with a surface (29) of the installed yaw ring (1) facing away from the bedframe (4) in the initial state, therefore limiting a movement of the bedframe (4) in the axial direction (30) with respect to the installed yaw ring (1), and in particular
wherein the detachment of the submodule (17) from the topmost segment (5) comprises a pivoting of at least one of the clamping means (26, 27) around a respective pivot axis (35) located outside of the overlapping section (28) to align the respective clamping means (26, 27) with a central opening (36) of the installed yaw ring (1).

9. Method according to claim 8, wherein least one of the clamping means (26, 27) stays attached to the bedframe (4) at least until the end of the step of lifting the refurbished module (19) onto the tower stump (9).

10. Method according to claim 8 or 9, wherein a further one of the clamping means (26, 27) is completely disconnected from the bedframe (4) and stored in a storage position (37) before another one of the clamping means (26, 27) is pivoted.

11. Method according to one of the preceding claims,
wherein multiple radial blocks (38, 39) are attached to the bedframe (4) in the initial state, and
wherein each radial block (38, 39) having a radial outer surface (40) that limits the movement of the bedframe (4) with respect to the installed yaw ring (1) in the radial direction (31) by contacting the radial inner surface (41) of the installed yaw ring (1) when the limit of the relative movement is reached, and
wherein the step of detaching the submodule (17) from the topmost segment (5) comprises the replacement of at least one of the radial blocks (38, 39) by a guiding block (42),
wherein the respective guiding block (42) has a radial outer surface (43) that limits the movement of the bedframe (4) with respect to the installed yaw ring (1) during the detachment of the submodule (17) from the topmost segment (5) in the radial direction (31) by contacting the radial inner surface (41) of the installed yaw ring (1) when the limit of the relative movement is reached while the distance between the yaw ring (1) and the bedframe (4) in the axial direction (30) is below the length (44) of the guiding block (42) in the axial direction (30), and
wherein the length (44) of the guiding block (42) in the axial direction (30) is larger than the length (45) of the radial block (38, 39) in the axial direction (30).

12. Method according to one of the preceding claims,
wherein the at least one yaw drive (7) is mounted to the bedframe (4),
wherein the respective yaw drive (7) comprises a gear (46) engaging a toothing of the installed yaw ring (1), in particular a toothing of the radial outer surface of the yaw ring (1), to rotate the bedframe (4) with respect to the topmost segment (5) when the yaw drive (7) is operated in the initial state, and
wherein the step of detaching the submodule (17) from the topmost segment (5) comprises shifting the respective gear (46) axially towards the bedframe (4), in particular by axially shifting a respective yaw motor (48) for driving the respective gear (46), before the bedframe (4) is lifted off the topmost segment (5).

13. Method for operating a wind turbine (2), in particular an offshore wind turbine (2), further in particular a floating offshore wind turbine (2), and/or for feeding electrical and/or chemical energy to an electrical and/or chemical utility grid (50), the method comprising the following steps:
executing steps of an embodiment of a method according to one of the preceding claims to replace an installed yaw ring (1) of the wind turbine (2) with a replacement yaw ring (3);
generating, by the wind turbine (2), electrical power and/or electrical energy, and in particular generating at least partially from the electrical energy, further in particular, by transforming electrical energy into hydrogen by electrolysis, chemical energy in form of a gas or liquid, in particular in the form of hydrogen;
transmitting at least a part of the electrical power and/or of the electrical energy and/or of the chemical energy to an energy receiving arrangement (49), in particular wherein the energy receiving arrangement (49) is not positioned in international waters, is positioned onshore, and/or is positioned within a 12-miles-zone of a respective sovereign national state over which the respective state has jurisdiction; and
supplying at least a part of the electrical power and/or of the electrical energy and/or of the chemical energy to an electrical and/or chemical utility grid (50), in particular to an onshore electrical and/or chemical utility grid (50).

14. A wind turbine comprising
a bedframe (4) that is pivot-mounted to a topmost segment (5) of a tower (6) of the wind turbine (2),
a replacement yaw ring (3) that is mounted to the topmost segment (5), and
at least one yaw drive (7) that engages the replacement yaw ring (3) to rotate the bedframe (4) with respect to the topmost segment (5) when the yaw drive (7) is operated, and wherein the replacement yaw ring (3) is mounted by using a method of one of the preceding claims 1 to 12 to replace a previously installed yaw ring (1).

15. System for replacing an installed yaw ring (1) of an off-shore wind turbine (2),
wherein the system (51) is designed to replace an installed yaw ring (1) of the wind turbine (2) with a replacement yaw ring (3) using the method according to one of the claims 1 to 12, when the system (51) is used in conjunction with the wind turbine (2),
wherein the system (51) comprises a ship (16) having a lifting device (20), in particular a crane (21),
for lifting the module (8) of the wind turbine (2) off the tower stump (9) of the tower (6) of the wind turbine (2),
for moving the submodule (17) to the holding position (18), and
for lifting the refurbished module (19) onto the tower stump (9), and
wherein the system (51) provides the holding position (13) for the module (8) on a deck (15) of the ship (16), in particular on a support frame (25) located on the deck (15), and the replacement yaw ring (3) stored on the ship (16).
